# EUROPEAN PATENT SPECIFICATION

(11) **EP 2 254 765 B1**
(45) Date of publication and mention of the grant of the patent: **31.08.2011**
(21) Application number: 09714398.6
(22) Date of filing: 24.02.2009
(51) Int. Cl.: B60J 7/06, B65D 88/12

(54) **MOVEMENT DEVICE FOR SLIDING ELEMENTS ASSOCIATED WITH A MEANS OF TRANSPORT AND MEANS OF TRANSPORT THUS EQUIPPED**
BEWEGUNGSVORRICHTUNG FÜR GLEITELEMENTE IN ZUSAMMENHANG MIT EINEM TRANSPORTMITTEL UND DAMIT AUSGESTATTETES TRANSPORTMITTEL
DISPOSITIF DE DEPLACEMENT POUR ELEMENTS COULISSANTS ASSOCIES A UN SYSTEME DE TRANSPORT, ET SYSTEME DE TRANSPORT AINSI EQUIPE

(30) Priority: 25.02.2008 IT UD20080041
(43) Date of publication of application: 01.12.2010
(73) Proprietor: Cramaro Italia Srl, 37044 Cologna Veneta (Vr) (IT)
(72) Inventor: CAPPONI, Massimo, I-36057 Arcugnano (IT); CASTAGNARO, Alberto, I-37047 San Bonifacio (IT)
(74) Representative: Petraz, Davide Luigi
(86) International application number: PCT/EP2009/052167
(87) International publication number: WO 2009/106523

(56) References cited:
- EP-A- 1 623 935
- DE-A1- 10 232 261
- GB-A- 2 387 153
- JP-A- 11 030 059
- JP-A- 55 156 717
- US-A- 4 274 789

## Description

### FIELD OF THE INVENTION

The present invention concerns a movement device for sliding elements associated or associable with a means of transport, such as a semi-trailer or a trailer of a truck or other.

In particular, the present invention concerns a movement device for sliding elements, for example a sliding cover of the load compartment of a means of transport. The movement device allows to facilitate the movement of the sliding elements even temporally associable with the load compartment during the loading/unloading operations.

### BACKGROUND OF THE INVENTION

Covering devices are known, for example EP 1623935, for means of transport, such as semi-trailers or trailers of trucks or railway wagons for the transport of goods or other, comprising a plurality of vertical arch-type elements, mounted sliding on corresponding guides disposed at the sides of the chassis and on which a covering tarpaulin is attached. The arch-type elements, sliding on the corresponding guides, are disposed in a first position in which they are substantially equidistant along the entire length of the load compartment of the means of transport, so as to stretch the tarpaulin in order to cover said compartment.

The arch-type elements, always sliding on said guides, are disposed in a second position in which they are put close to a rear or front side of the means of transport, allowing to compact the covering tarpaulin so as to uncover said load compartment and make it accessible.

A second covering device for means of transport, commonly called "French curves", comprises curved elements, sliding in corresponding lateral guides of the chassis of the means of transport and to which a concertina-type cover is attached. This second device functions substantially in the same way as the first known device, providing a quicker and more efficient sliding of the curved elements.

One disadvantage of said covering devices is that when the sliding arch-type elements or the curved elements are disposed close together in the second position, they determine a considerable longitudinal bulk which prevents access to a corresponding portion of the load compartment. This constitutes an impediment to the movement on the means of transport of goods which occupy entirely, or almost, the load compartment of the means of transport, such as for example containers or long wooden products or other.

Purpose of the present invention is to equip a means of transport with an auxiliary movement device able to assume a temporary work position to allow the movement of auxiliary sliding elements. In the case of sliding covers of a means of transport, said device allows to eliminate the bulk of the sliding cover when the latter is closed, and makes the load compartment of the means of transport accessible during the movement of goods.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purpose, a movement device for sliding elements associated with a means of transport according to the present invention is used to close/open a sliding cover of a load compartment of the means of transport, such as a trailer or semi-trailer of a truck.

The movement device is associated with opposite longitudinal sliding guides of the chassis of the means of transport, suitable to allow the movement of said cover.

According to a characteristic feature of the present invention, the movement device comprises auxiliary sliding elements suitable for the sliding of said cover and associated with the longitudinal sliding guides of the chassis. The auxiliary sliding elements are mobile between a first inactive position, in which they are disposed in the bulk of the chassis of the means of transport, and at least a second work position, in which they are disposed cooperating with the sliding guides. In the second position the auxiliary sliding elements define an auxiliary seating.

The auxiliary sliding elements, disposed in their second position, allow the temporary housing of the sliding cover and its supporting elements in the auxiliary seating.

One advantage of this device is that the auxiliary elements, disposed in their first inactive position, are comprised in the bulk of the chassis, allowing to maintain substantially the same bulk as an analogous means of transport that does not have said movement device.

Another advantage of the device is that it can be mounted both during the construction of the means of transport and also during a subsequent fitting.

Advantageously, the movement device comprises first clamping means suitable to keep the auxiliary sliding elements stable, when they are disposed in their first inactive position. The movement device comprises possible second clamping means suitable to keep the auxiliary sliding elements stable when they are disposed in their second work position.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a schematic lateral view of a means of transport having a movement device for sliding elements according to the present invention in a first working configuration;
- fig. 2 is a schematic lateral view of the means of transport in fig. 1 having the movement device in a second working configuration;
- fig. 3 is a lateral schematic view of the means of transport in fig. 2 where the sliding elements are close together;
- fig. 4 is an enlarged perspective view of a first form of embodiment of the movement device in fig. 1;
- fig. 5a is an enlarged perspective view of a second form of embodiment of the movement device in fig. 1 in a first working configuration;
- fig. 5b is an enlarged perspective view of the device in fig. 5a in an intermediate working configuration;
- fig. 5c is an enlarged perspective view of the device in fig. 5a in an inactive configuration.

### DETAILED DESCRIPTION OF A PREFERENTIAL FORM OF EMBODIMENT

With reference to the attached drawings, a movement device 10 for sliding elements, in this case sliding covers 12, according to the present invention is coupled with the chassis 15 of a means of transport 11.

The device 10 is associated with corresponding sliding guides 27 disposed longitudinally on the two flanks of the chassis 15 and suitable to move the supporting elements 13 of a sliding cover 12 of a load compartment 18 of the means of transport 11.

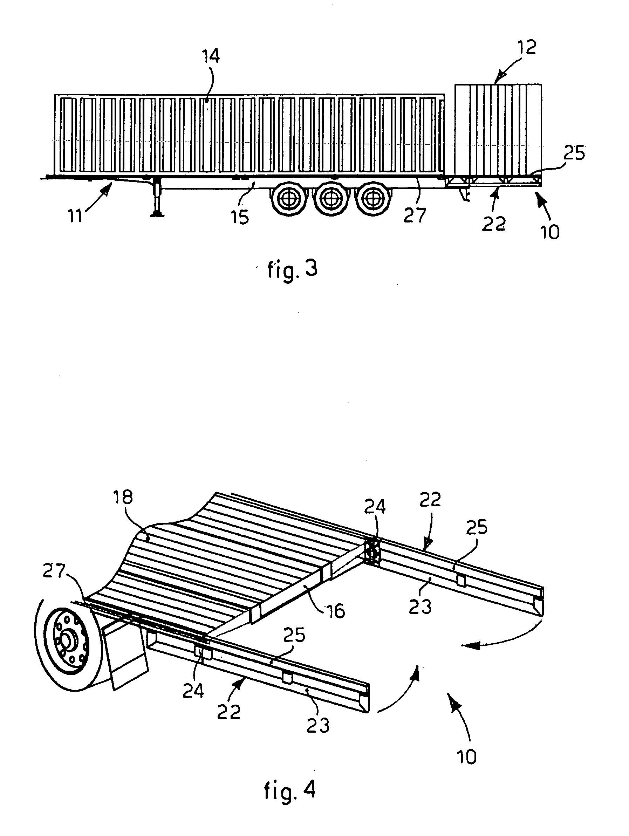

The device 10 comprises two auxiliary sliding appendices 22 (fig. 4), substantially oblong in shape, and disposed hinged on the rear corners of the flanks of the chassis 15, on the rear side 16. Each auxiliary appendix 22 is suitable for the sliding of the supporting elements 13 of the cover 12. Indeed, each auxiliary appendix 22 comprises an auxiliary guide 25, able to be coupled with a corresponding sliding guide 27 of the means of transport 11.

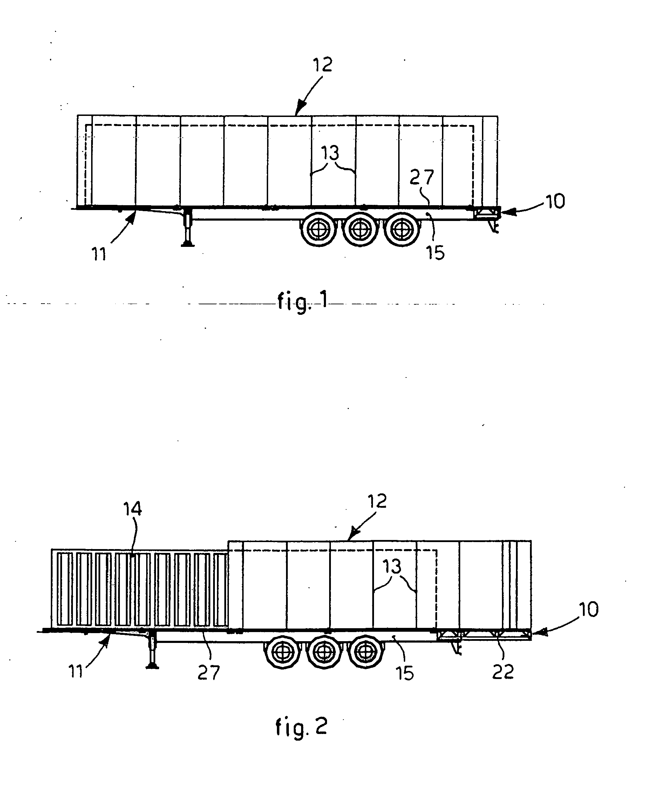

Each auxiliary appendix 22 is hinged at one end, by means of a corresponding hinge 24, to the chassis 15, so as to be able to rotate in a substantially horizontal plane (fig. 4), between a first inactive position and a second work position. The first position of the auxiliary appendices 22 corresponds substantially to a closed condition, that is, covering the load compartment 18 by means of the sliding cover 12 (fig. 1). In this position the appendices 22 are disposed near the rear side 16 of the chassis 15, comprised in the bulk of the chassis 15.

In the second work position, the auxiliary appendices 22 (figs. 2, 3 and 4) are disposed in a longitudinal direction of the means of transport 11, so as to couple each auxiliary guide 25 as an extension of a corresponding guide 27. The extension of the guide 27 that moves the supporting elements 13 of the cover 12 develops outside the zone of the chassis 15 corresponding to the load compartment 18. The extension is suitable for the temporary housing of the sliding cover 12 in its open condition (fig. 3), that is, folded back and suitable to uncover the load compartment 18 and allow free access to the whole of its usable load area.

Advantageously, each appendix 22 comprises reinforcement bars 23 suitable to stabilize the appendix 22 in its work position, according to the maximum load to which it is subjected when the sliding cover 12 is disposed folded back in correspondence with said auxiliary seating.

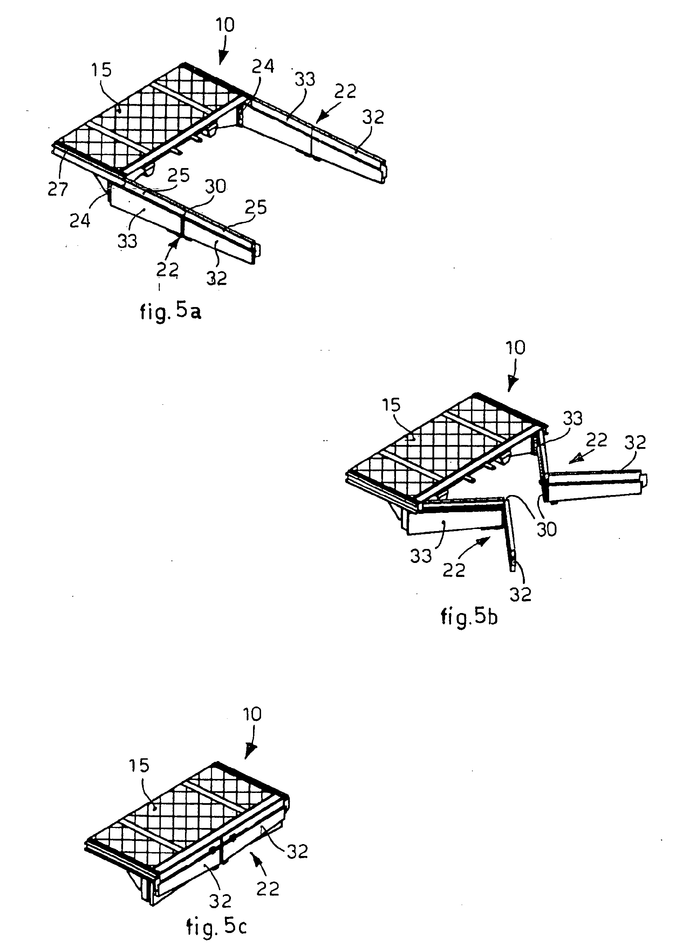

In a second form of embodiment, shown in figs. 5a, 5b and 5c, each auxiliary appendix 22 is mobile between its first and second position by a concertina-type opening. Indeed, each appendix 22 comprises a first 32 and a second 33 flat plate, reciprocally constrained at a corresponding end by means of an articulation element 30. Both the first 32and also the second 33 plate comprise corresponding auxiliary guides 25 suitable to constitute a single sliding seating, and coupled with the corresponding guides 27 of the supporting elements 13 when each appendix 22 is extended in its second position.

Advantageously, the movement device 10 comprises first clamping elements, of a known type and not shown in the drawings, suitable to clamp stably and securely the appendix 22 in close contact with the chassis 15, in its first inactive position, used for example during transport on the road.

Furthermore, the movement device 10 comprises second clamping elements, again of a known type and not shown in the drawings, suitable to clamp stably and securely each appendix 22 in its second work position, during the loading/unloading operations.

Advantageously, the device 10 comprises actuation means, of a known type and not shown in the drawings, suitable to move the auxiliary appendix 22 automatically or semi-automatically.

The device as described heretofore functions as follows.

With reference to figs. 1, 2 and 3, before moving a container 14 transported by the means of transport 11 and covered by the sliding cover 12, the auxiliary appendices 22, normally positioned in their first position during transportation on road, are unclamped and disposed in their second position. In this way, said auxiliary sliding seating is defined (fig. 2) for the sliding cover 12, which extends longitudinally outside the bulk of the chassis 15.

The sliding cover 12 is therefore completely folded back (fig. 3) manually by operators, or automatically by automatic actuation means, and moved into correspondence with said auxiliary sliding seating defined by the appendices 22. In this way, the entire usable load area is uncovered, allowing to remove the container 14, by acting with suitable movement means and avoiding possible interferences produced by the sliding cover 12.

When the container 14 has been unloaded, the supporting elements 13 are made to slide in the guide 27, simultaneously extending the sliding cover above the load compartment 18 of the means of transport 11. The auxiliary appendices 22 are closed in their first inactive position and clamped by the corresponding first clamping means.

It is clear that modifications and/or additions of parts may be made to the movement device 10 as described heretofore, without departing from the field and scope of the present invention. For example, it comes within the field of the present invention to provide that the auxiliary appendices 22 are slidingly mobile in suitable longitudinal guides disposed on the flank of the means of transport 11, and in the inactive position are disposed in a suitable stationary seating defined in each flank of the chassis 15.

It is also clear that, although the present invention has been described with reference to some specific examples, a person of skill in the art shall certainly be able to achieve many other equivalent forms of movement device 10 for sliding covers of a means of transport, having the characteristics as set forth in the claims and hence all coming within the field of protection defined thereby.

## Claims

1. Movement device for sliding elements (12) of a means of transport (11) comprising a chassis (15), associated with longitudinal sliding guides (27), able to move said sliding elements (12), the movement device comprising auxiliary sliding elements (22), suitable for the sliding of the sliding elements (12), and associated with said longitudinal sliding guides (27), **characterized in that** said auxiliary elements (22) are mobile between a first inactive position comprised in the bulk of the chassis (15) and at least a second work position, disposed in a longitudinal direction of the means of transport (11), wherein each of said auxiliary sliding element (22) is hinged at one end, by means of a corresponding hinge (24), to the chassis (15) and is rotatable in an horizontal plane between said first inactive position and its second work position.

2. Device as in claim 1, **characterized in that** each auxiliary sliding element (22) comprises an auxiliary sliding guide (25) associated, in its second work position, with a sliding guide (27) of said means of transport (11) so as to form a longitudinal extension of said sliding guide (27).

3. Device as in claim 1, **characterized in that** each auxiliary sliding element (22) comprises a first plate (32) and a second plate (33), reciprocally constrained by means of an articulation element (30), in order to open/close concertina-wise the auxiliary element (22) between its first and second position.

4. Device as in any claim hereinbefore, **characterized in that** it comprises first clamping means able to keep said auxiliary sliding elements (22) stable in the first inactive position.

5. Device as in any claim hereinbefore, **characterized in that** it comprises second clamping means able to keep said auxiliary sliding elements (22) stable in the second work position.

6. Device as in any claim hereinbefore, **characterized in that** it comprises actuation means able to determine the automatic or semi-automatic movement of the auxiliary sliding elements (22), between the first inactive position and the second work position.

7. Device as in any claim hereinbefore, **characterized in that** said sliding elements (12) comprise a sliding cover.

8. Means of transport having sliding elements (12), **characterized in that** it is equipped with a movement device as claimed in any claimed hereinbefore associated with said sliding elements (12) and mobile between a first inactive position and at least a second work position.

## Patentansprüche

1. Bewegungsvorrichtung für Schiebeelemente (12) eines Transportmittels (11), das ein Fahrgestell (15) umfasst, die sich längs erstreckenden Schiebeführungen (27) zugeordnet sind, die dazu fähig ist, die Schiebeelemente (12) zu bewegen, wobei die Bewegungsvorrichtung Zusatzschiebeelemente (22) aufweist, die dazu geeignet sind, die Schiebeelemente (12) zu verschieben, und den sich längs erstreckenden Schiebeführungen (27) zugeordnet sind, **dadurch gekennzeichnet, dass** die Zusatzelemente (22) zwischen einer ersten inaktiven Position, in der sie in dem Körper des Fahrgestells (15) untergebracht sind, und mindestens einer zweiten Arbeitsposition beweglich sind, in der sie in einer Längsrichtung des Transportmittels (11) angeordnet sind, wobei jedes der Zusatzschiebeelemente (22) an einem Ende mittels eines entsprechenden Scharniers (24) gelenkig mit dem Fahrgestell (15) verbunden und in einer waagrechten Ebene zwischen der ersten inaktiven Position und seiner zweiten Arbeitsposition verschwenkbar ist.

2. Vorrichtung nach Anspruch 1, **dadurch gekennzeichnet, dass** jedes Zusatzschiebeelement (22) eine Zusatzschiebeführung (25) umfasst, die in ihrer zweiten Arbeitsposition einer Schiebeführung (27) des Transportmittels (11) zugeordnet ist, um so eine Längsverlängerung der schiebeführung (27) zu bilden.

3. Vorrichtung nach Anspruch 1, **dadurch gekennzeichnet, dass** jedes Zusatzschiebeelement (22) eine erste Platte (32) und eine zweite Platte (33) aufweist, die in ihrer Hin- und Herbewegung von einem Gelenkelement (30) eingeschränkt werden, um das Zusatzelement (22) ziehharmonikaartig zwischen seiner ersten und zweiten Position zu öffnen bzw. zu schießen.

4. Vorrichtung nach einem der vorhergehenden Ansprüche, **dadurch gekennzeichnet, dass** sie erste Spannmittel umfasst, die dazu fähig sind, die Zusatzschiebemittel (22) stabil in der ersten inaktiven Position zu halten.

5. Vorrichtung nach einem der vorhergehenden Ansprüche, **dadurch gekennzeichnet, dass** sie zweite Spannmittel umfasst, die dazu fähig sind, die Zusatzschiebeelemente (22) stabil in der zweiten Arbeitsposition zu halten.

6. Vorrichtung nach einem der vorhergehenden Ansprüche, **dadurch gekennzeichnet, dass** sie Betätigungsmittel umfasst, die dazu fähig sind, eine automatische oder halbautomatische Bewegung der Zusatzschiebeelemente (22) zwischen der ersten inaktiven Position und der zweiten Arbeitsposition zu bestimmen.

7. Vorrichtung nach einem der vorhergehenden Ansprüche, **dadurch gekennzeichnet, dass** die Schiebeelemente (12) eine Schiebeabdeckung umfassen.

8. Transportmittel, das Schiebeelemente (12) aufweist, **dadurch gekennzeichnet, dass** es mit einer Bewegungsvorrichtung nach einem der vorhergehenden Ansprüche ausgerüstet ist, die den Schiebeelementen (12) zugeordnet ist und zwischen einer ersten inaktiven Position und mindestens einer zweiten Arbeitsposition beweglich ist.

## Revendications

1. Dispositif de déplacement pour éléments coulissants (12) d'un moyen de transport (11) comprenant un châssis (15), associée à des glissières longitudinales (27), capable de déplacer lesdits éléments coulissants (12), le dispositif de déplacement comprenant des éléments coulissants auxiliaires (22), adaptés pour le coulissement des éléments coulissants (12), et associés auxdites glissières longitudinales (27), **caractérisé en ce que** lesdits éléments auxiliaires (22) sont mobiles entre une première position inactive comprise dans le volume du châssis (15) et au moins une deuxième position de travail, disposée selon une direction longitudinale du moyen de transport (11), dans lequel chacun desdits éléments coulissants auxiliaires (22) est articulé à une extrémité, au moyen d'une charnière correspondante (24), sur le châssis (15) et peut pivoter dans un plan horizontal, entre ladite première position inactive et sa deuxième position de travail.

2. Dispositif selon la revendication 1, **caractérisé en ce que** chaque élément coulissant auxiliaire (22) comprend une glissière auxiliaire (25) associée, dans sa deuxième position de travail, à une glissière (27) dudit moyen de transport (11) de manière à former une extension longitudinale de ladite glissière (27).

3. Dispositif selon la revendication 1, **caractérisé en ce que** chaque élément coulissant auxiliaire (22) comprend une première plaque (32) et une deuxième plaque (33), réciproquement limitées au moyen d'un élément d'articulation (30), afin d'ouvrir/fermer en accordéon l'élément auxiliaire (22) entre sa première et sa deuxième position.

4. Dispositif selon l'une quelconque des revendications précédentes, **caractérisé en ce qu'**il comprend des premiers moyens de serrage capables de maintenir lesdits éléments coulissants auxiliaires (22) stables dans la première position inactive.

5. Dispositif selon l'une quelconque des revendications précédentes, **caractérisé en ce qu'**il comprend des seconds moyens de serrage capables de maintenir lesdits éléments coulissants auxiliaires (22) stables dans la deuxième position de travail.

6. Dispositif selon l'une des revendications précédentes, **caractérisé en ce qu'**il comprend des moyens d'actionnement capables de déterminer le déplacement automatique ou semi-automatique des éléments auxiliaires coulissants (22), entre la première position inactive et la deuxième position de travail.

7. Dispositif selon l'une quelconque des revendications précédentes, **caractérisé en ce que** lesdits éléments coulissants (12) comprennent un couvercle coulissant.

8. Moyen de transport ayant des éléments coulissants (12), **caractérisé en ce qu'**il est équipé d'un dispositif de déplacement selon l'une quelconque des revendications précédentes associé auxdits éléments coulissants (12) et mobile entre une première position inactive et au moins une deuxième position de travail.
